# EUROPÄISCHE PATENTSCHRIFT

(11) **EP 1 567 304 B1**
(45) Veröffentlichungstag und Bekanntmachung des Hinweises auf die Patenterteilung: **17.05.2006**
(21) Anmeldenummer: 03811721.4
(22) Anmeldetag: 07.08.2003
(51) Int. Cl.: B23Q 11/00

(54) **HANDWERKZEUGMASCHINE MIT STAUBBOX**
HAND-HELD MACHINE TOOL COMPRISING A DUST BOX
MACHINE-OUTIL PORTATIVE COMPORTANT UN COMPARTIMENT A POUSSIERE

(30) Priorität: 25.11.2002 DE 10254839
(43) Veröffentlichungstag der Anmeldung: 31.08.2005
(73) Patentinhaber: ROBERT BOSCH GMBH, 70442 Stuttgart (DE)
(72) Erfinder: WUENSCH, Steffen, 71088 Holzgerlingen (DE)
(86) Internationale Anmeldenummer: PCT/DE2003/002668
(87) Internationale Veröffentlichungsnummer: WO 2004/048028

(56) Entgegenhaltungen:
- US-A- 4 209 069
- US-A- 4 361 957
- US-A1- 2002 152 731

## Beschreibung

### Stand der Technik

Die vorliegende Erfindung betrifft eine Handwerkzeugmaschine mit Staubbox nach dem Oberbegriff des Anspruchs 1.

Durch das Patent US 4,209,069 ist eine Handwerkzeugmaschine mit Motorluftkühlung bekannt, deren Kühlluft durch die Staubbox hindurch angesaugt wird. Zwischen der Staubbox und dem Kühlventilator ist ein Staubfilter angeordnet, damit kein Staub mit der Kühlluft ins Motorinnere gelangt. Außerdem führt ein Spanabsaugrohr von der Handwerkzeugmaschine zur Staubbox. Durch dieses werden beim Werkzeugeingriff in ein Werkstück die dabei entstehenden Späne und Staub zur Staubbox transportiert.

Dabei besteht der Nachteil, dass der Kühlluftstrom durch den hohen Widerstand des dem Kühlventilator vorgeschalteten Staubfilters beeinträchtigt ist. Auf Staubfilter kann jedoch nicht verzichtet werden, da mit der Kühlluft in den Motor eintretender Staub die Motorfunktion stört. Darüber hinaus verursacht die aus dem Motorgehäuse tretende Kühlabluft gesundheitsbeeinträchtigende Staubverwirbelungen im Spanabtragsbereich des Werkzeugs.

### Vorteile der Erfindung

Die vorliegende Erfindung mit den Merkmalen des Anspruchs 1 hat den Vorteil, dass die Kühlabluft nicht mehr unmittelbar aus dem Gehäuse ins Freie austreten kann, sondern daß die Kühl-Abluft strömungsgünstig über die Staubbox geleitet wird und dabei das Gehäuse ungedrosselt verlässt, wobei gleichzeitig der Staubabtransport in die Staubbox verbessert wird, wobei zugleich die Kühlabluft den Staub im Werkzeugbereich nicht verwirbeln kann. Außerdem wird die Spanabsaugung im Bereich des Werkzeugeingriffs durch die Injektorwirkung des über die Staubbox geleiteten Kühlabluftstromes verbessert.

Dadurch, dass die Kühlabluft getrennt von der Staubabluft vom Gehäuse zur Staubbox und ungedrosselt über diese hinweg geführt wird, ist der Wirkungsgrad der Motorkühlung unvermindert hoch.

Dadurch, dass ein Absaugstutzen des Gehäuses die Staubabluft getrennt von der Kühlabluft führt, wird ein Vermischen der beiden Luftströme vermieden und der Staubabtransport und zugleich die Motorkühlung mit hohem Wirkungsgrad gewährleistet.

Dadurch, dass die Staubbox an ihrem hinteren Ende eine Luftauslassöffnung gemeinsam für die Staub- und die Kühlabluft trägt, muß die Kühlabluft deren gesamte obere Seite überstreichen und ihr volle Wirkung als Unterdruckpumpe entfalten mit einer deutlichen Verbesserung des Staubabtransports.

Dadurch, dass der horizontal längsgeteilte Staubabluftstutzen der Handwerkzeugmaschine radial außen und oben eine Eintrittsöffnung des im oberen Teil des Staubabluftstutzens gebildeten Kühlabluftkanals hat, kann die Kühlabluft einfach weiter zur Staubbox und über deren Außenfläche geführt werden.

Dadurch, dass die Staubbox einen zum Staubabluftstutzen passenden und mit diesem verbindbaren Kupplungsstutzen aufweist, dessen Kühlabluftkanal mit dem des maßlich an diesen angepassten Staubabluftstutzens kuppelbar ist, ist eine verbesserter Staubabtransport in die Staubbox realisierbar.

Dadurch, dass die Staubbox mit einem deckelartig lösbaren Boden versehen ist, ist sie besonders einfach entleerbar.

Dadurch, dass die Staubbox auch eine deckelartig lösbare obere Wand aufweist, ist diese gemeinsam mit dem Filter besonders einfach entnehmbar und sodann durch Ausklopfen einfach vom Staub zu befreien.

Dadurch, dass der Kühlabluftstrom das Gehäuse durch einen zyklonartigen Ringabluftkanal tangential verlassen muß, wird der Strömungswiderstand des Kühlabluftstromes verringert, wobei der Schall gedämpft wird. Dadurch werden insbesondere hohe Schwingungsfrequenzen der Kühlabluft unterdrückt.

### Zeichnung

Nachstehend ist die Erfindung anhand eines Ausführungsbeispiels mit zugehöriger Zeichnung näher erläutert.

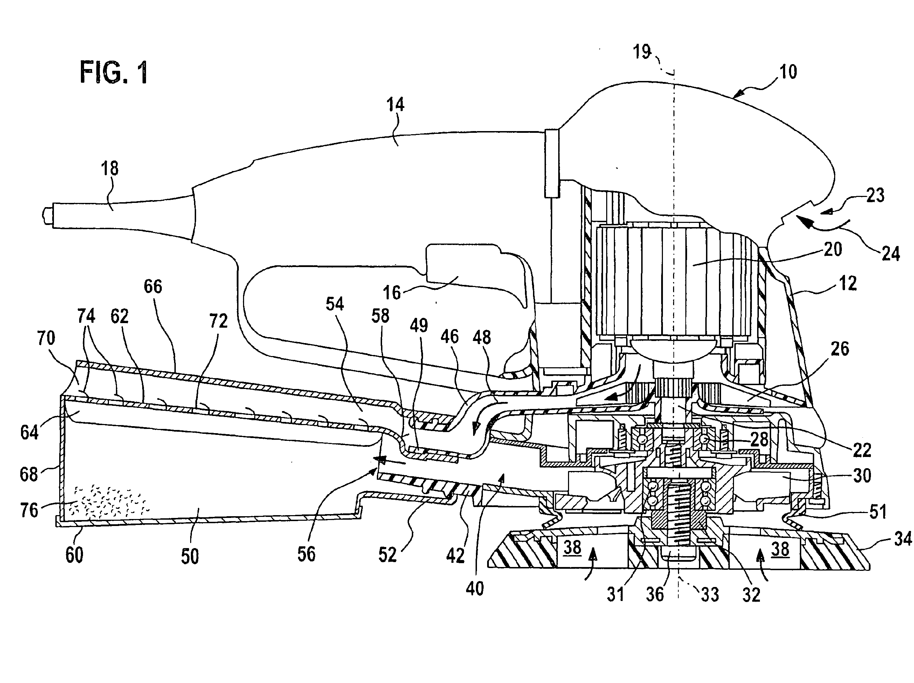

Es zeigen
Figur 1 einen Längsschnitt eines erfindungsgemäßen Exzenterschleifers.
Figur 2 einen Längsschnitt einer erfindungsgemäßen Staubbox,
Figur 3 eine Frontansicht der Staubbox gemäß Figur 2 und die
Figuren 4,5 rundrohrartige, längsgeteilte Kupplungsstutzen der Staubbox.

### Ausführungsbeispiel

Die Zeichnung zeigt eine als Exzenterschleifer ausgestaltete Handwerkzeugmaschine 10 mit einem Gehäuse 12, das in Betrachtungsrichtung nach links einen waagerechten Handgriff 14 aufweist, der eine handbetätigbare Schalttaste 16 eines nicht dargestellten Schalters zum Starten und Stoppen des Motors 20 trägt.

Am hinteren Ende des Handgriffs 14 tritt ein Elektrokabel 18 aus, das zur Energieversorgung des Motors 20 dient.

Das Gehäuse 12 trägt den Motor 20 mit einer senkrecht zum Handgriff 14 verlaufenden Motorachse 19, in deren Verlängerung nach unten aus dem Motor 20 eine Motorwelle 22 ragt. Deren Ende wird drehfest von einem Kühl-Ventilator 26 umgriffen, der Luft radial nach außen in Richtung des Richtungspfeiles 48 fördert. Dadurch wird im oberen Bereich des Gehäuses 12 an Kühlschlitzen 23 des Gehäuses 12 kühlende Außenluft angesaugt, die gemäß Richtungspfeil 24 in das Gehäuse 12 ein- und am Motor 20 vorbeiströmen kann und anschließend durch einen Verbindungskanal 46 das Gehäuse 12 durch dessen Absaugstutzen 42 verlassen kann.

Der Verbindungskanal 46 ist bis zum Ende des Absaugstutzens 42 gegenüber diesem abgedichtet geführt. Dies wird mit einer separaten Trennwand 49 erreicht, durch die ein Vermischen der Kühlabluft mit der Staubabluft im Absaugstutzen verhindert wird. Dadurch kann die Kühlabluft ihre Absaugwirkung durch Überströmen der Außenflächen der Staubbox 50 entfalten. Die Trennwand 49 des Absaugstutzens 49 wird beim Ankuppeln der Staubbox 50 und beim Überschieben des Kupplungsstutzens 52 über den Absaugstutzen 42 durch eine achsparallele Trennwand 58 der Staubbox 50 untergriffen. Dadurch kann die Staubabluft über den Staubabluftkanal 40 unverwirbelt und ohne Strömungsverluste in die Staubbox 50 eintreten und diese von Staub gereinigt verlassen. Dazu durchtritt die Staubabluft einen Faltenfilter 64 an der Oberseite der Staubbox 50, insbesondere dicht verklebt mit deren oberen Deckel 42, wobei die vom Staub befreite Abluft durch eine Veilzahl von Luftlöchern 72 des Deckels 62 tritt und die Staubbox 50 durch die Luftauslassöffnung 70 verlassen kann. Die Luftauslassöffnung 70 wird zwischen hinterem Rand des Deckels 62 und einer diesen übergreifenden Haube 66 gebildet. Die Haube 66 geht auf der der Luftauslassöffnung gegenüberliegenden Seite in den Kupplungsstutzen 62 über und bildet die Oberseite des Kühlluftkanals 54 der Staubbox 50. Die Luftlöcher 72 auf der Oberseite der Staubbox 50 und teilweise überdeckt durch kleine Spoiler 54, die von der Kühlabluft schnell und ohne Verwirbelung überströmt werden und die zu einem verstärkten Unterdruck beim Überströmen durch Kühlabluft an den Luftlöchern 72 beitragen. Sobald der Motor 20 der Handwerkzeugmaschine 10 eingeschaltet wird und Kühlabluft den Deckel 62 der Staubbox 50 überströmt, setzt ein verstärkter Abluftstrom über den Luftlöchern 72 ein, der den Staubabluftstrom schon an den Staubabsauglöchern 38 des Schleiftellers 34 deutlich verstärkt, so dass damit der Staubeintrag in die Umgebungsluft der Handwerkzeugmaschine 10, aber auch der Wirkungsgrad der Schleifarbeiten durch direkteren Eingriff der Schleifkörner ins Werkstück ohne hemmenden Schleifstaub verstärkt.

Axial nach unten hin ist das den Kühlventilator 26 umgebende Gehäuse 12 abgedichtet und wird vom unteren Ende der Motorwelle 22 durchtreten. Diese ist dort in einem Wälzlager 28 drehbar gelagert.

Im glockenartigen, vom Kühlventilator 26 abgewandten Bereich trägt das freie Ende der Motorwelle 22 einen Staubventilator 30, der an den Staubabsauglöchern 38 des Schleiftellers 34 Luft bzw. Späne einsaugt und diese zum Absaugstutzen 42 hinausbläst.

Eine am unteren Rand des Gehäuses 12 sitzende, ringförmige Dichtlippe 51 stützt sich federelastisch vorgespannt in axialer Richtung oben am Schleifteller 34 ab. Damit ist der Raum zwischen dem Gehäuse 12 und dem Schleifteller 34 gegen störende Falschluft abgedichtet und der Spanabtransport mit hohem Wirkungsgrad gesichert.

Der Staubventilator 30 weist nach unten zum Schleifteller 34 hin eine nicht näher bezeichnete exzentrische Öffnung auf, die als Lagersitz für ein Kugellager 31 dient. Dieses exzentrisch sitzende Kugellager 31 trägt einen Exzenterzapfen 32, der über einer Schraube 36 drehfest mit dem Schleifteller 34 verbindbar ist.

Dreht sich die Motorwelle 22, so folgt mit dem Staubventilator 30 der Exzenter 32 wegen seiner Lagerreibung bzw. der des Kugellagers 31 dieser Drehung, indem er um seine Exzenterachse 33 rotiert und gleichzeitig um die Motorachse 19 beziehungsweise die Motorwelle 22 kreist. Dies führt zur charakteristischen orbitalen, bei Exzenterschleifern üblichen Schwingbewegung des Schleiftellers 34.

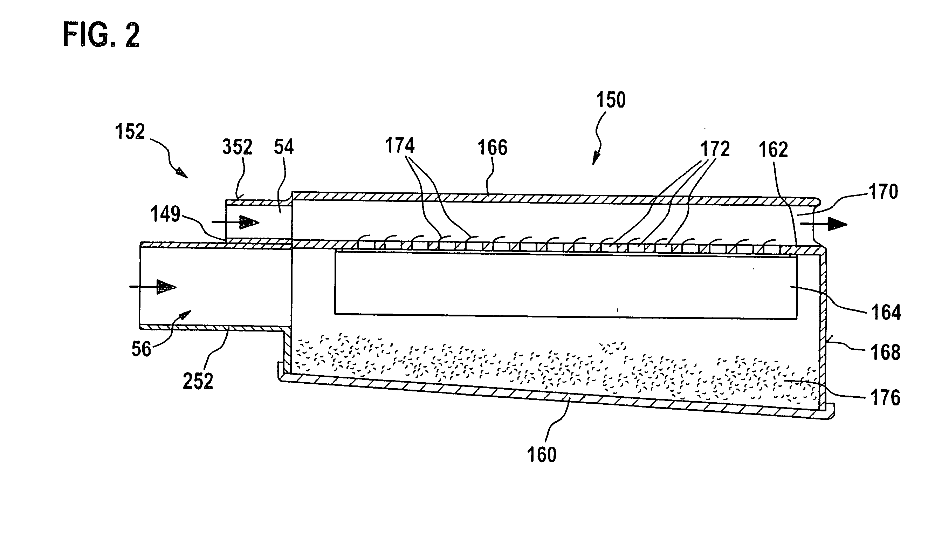

Figur 2 zeigt einen Längsschnitt durch ein weiteres Ausführungsbeispiel einer Staubbox 150, deren deckelartiger Boden 160 lösbar angeordnet ist, so dass eine bequeme Staubentnahme aus der Staubbox 150 möglich ist. Auf der in Betrachtungsrichtung linken Seite ist der Kupplungsstutzen 152 erkennbar, der geteilt ausgeführt ist und aus einem oberen Kühlluftkanal und einem unteren Staubluftkanal besteht, die durch einen Kühlabluftstutzen 352 und einen von diesem getrennten, axial über diesen hervorstehenden Staubabluftstutzen 252 gebildet wird. Dem Boden 160 gegenüberliegend ist der Deckel 162, der einstückig in die Seitenwände 68 der Staubbox 150 übergeht.

Auf seiner Oberseite trägt der Deckel 162 eine Vielzahl nebeneinander angeordneter, gleichmäßig verteilter Luftlöcher 172, die auf ihrer dem Kupplungsstutzen 152 zugewandten Seite mit einer Vielzahl kiemenartiger, zur entgegengesetzten Seite hin geneigter Spoiler 174 versehen sind, die von durch den Kühlluftkanal 54 eingeblasener Kühlabluft mit minimalem Strömungsverlust überströmt werden, wobei die Unterdruckwirkung an den Luftlöchern 172 erhöht wird, so dass damit der Staubabtransport vom Schleifteller 34 in die Staubbox 150 besonders effizient ist.

Die Luftlöcher 172 werden auf der Innenseite der Staubbox 150 vom Papierfaltenfilter 164 staubdicht übergriffen, so dass der staubtransportierenden Staubabluft kein anderer Ausweg aus der Staubbox 150 hinaus bleibt, als über das Falterfilter 164. Hinausbefördert wird die Staubabluft einerseits durch einen gewissen Überdruck im Inneren der Staubbox 150 und einen Unterdruck oberhalb der Luftlöcher 172.

Auf der in Betrachtungsrichtung rechten Seite ist zwischen der Oberseite der Haube 166 und dem Deckel 162 ein nahezu über die gesamte Breite der Staubbox 150 reichender Schlitz gebildet, der als Luftauslassöffnung 170 dient.

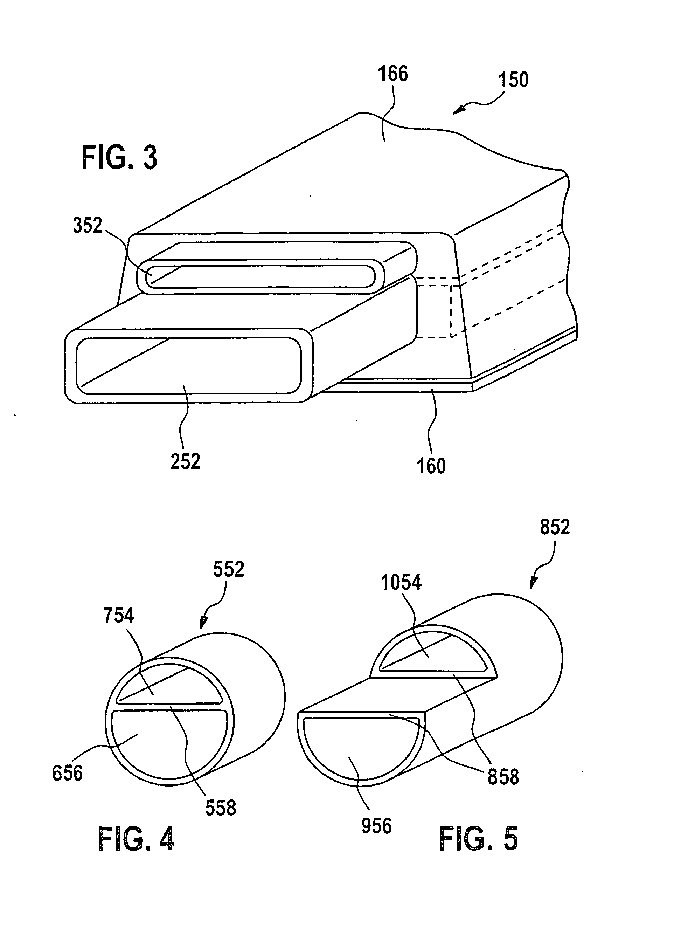

Figur 3 zeigt eine Frontansicht der Staubbox 150, wobei der aus Kühlabluftkanal 352 und Staubabluftkanal 252 gebildete Kupplungsstutzen mit dem Absaugstutzen 42 der Handwerkzeugmaschine 10 kuppelbar ist. Auf der Unterseite der Staubbox 150 ist der lösbare deckelartige Boden 160 erkennbar, nach dessen Öffnen die Staubbox 150 bequem von Staub befreit werden kann.

Die Figuren 4 und 5 zeigen rundzylindrische Kupplungsstutzen 552, 852 mit längsverlaufender Trennwand 558, 858, durch die ein getrenntes Führen der Kühl- und der Staubabluft in den oberen Kühlabluftkanälen 752 bzw. dem darunter liegenden Staubluftkanal 656 bzw. 956, der vom darüberliegenden Kanal durch je eine Trennwand 558 bzw. 858 getrennt ist.

Entsprechend den rundzylindrischen Kupplungsstutzen 552, 862 müssen die Absaugstutzen des Gehäuses 12 ebenfalls rundzylindrisch mit entsprechender längsgerichteter Trennwand ausgeführt sein, so dass diese ineinandersteckbar sind.

## Patentansprüche

1. Handwerkzeugmaschine (10) mit einem Gehäuse (12), das einen Motor (20) mit Lüftkühlung und Kühlabluftkanal (48) sowie einen einen Spanabsaugstrom führenden Absaugstutzen (42) aufweist und daran eine Staubbox (50, 150) mit Luftlöchern (72, 172) trägt, **dadurch gekennzeichnet, dass** aus dem Kühlabluftkanal (48) heraus Kühl-Abluft mit hoher Geschwindigkeit die Staubbox (50, 150) im Bereich ihrer Luftlöcher (72, 172) um-und überströmt.

2. Handwerkzeugmaschine nach Anspruch 1, **dadurch gekennzeichnet, dass** die Kühlabluft getrennt von der Staubabluft aus dem Gehäuse (12) zur Staubbox (50, 150) und weiter, insbesondere ungedrosselt, über deren Luftlöcher (72, 172), vorzugsweise großflächig wie in einem Flachkanal, hinweggeführt wird.

3. Handwerkzeugmaschine nach Anspruch 1 oder 2, **dadurch gekennzeichnet, dass** im Absaugstutzen (42) des Gehäuses (12) der Staubabluftstrom gegenüber dem Kühlabluftstrom, insbesondere durch eine Trennwand (49), abgedichtet geführt wird.

4. Handwerkzeugmaschine nach Anspruch 1-3, **dadurch gekennzeichnet, dass** die Staubbox (50, 150) parallel beabstandet zur Außenwand (62, 162) mit den Luftlöchern (72, 172) eine luftundurchlässige Haube (66) trägt, die an ihrem hinteren Ende durch eine Luftauslassöffnung (70) durchbrochen ist.

5. Handwerkzeugmaschine nach Anspruch 1-5, **dadurch gekennzeichnet, dass** der horizontal längsgeteilte Absaugstutzen (42) radial außen und oben eine Eintrittsöffnung des Kühlabluftkanals (48) hat, der im oberen Teil des Absaugstutzens (42) geführt wird.

6. Handwerkzeugmaschine nach Anspruch 1, **dadurch gekennzeichnet, dass** die Staubbox (50, 150) einen Kupplungsstutzen (52, 152) zur Verbindung mit dem Absaugstutzen (42) der Handwerkzeugmaschine (10) aufweist, dessen Kühlluftkanal (54, 154) mit dem Kühlabluftkanal (48) des Absaugstutzens (42) kuppelbar ist.

7. Handwerkzeugmaschine nach Anspruch 1, **dadurch gekennzeichnet, dass** die Staubbox (50, 150) mit einem deckelartig lösbaren Boden (60, 160) versehen ist,

8. Handwerkzeugmaschine nach Anspruch 1, **dadurch gekennzeichnet, dass** die Staubbox (50) eine deckelartig lösbare obere Wand (62) aufweist, die den Faltenfilter (64) trägt.

9. Handwerkzeugmaschine nach Anspruch 1, **dadurch gekennzeichnet, daß** der Kühlabluftkanal (44, 46) über einen Verbindungskanal (46) mit dem Absaugkanal (40, 42) zusammengeführt ist.

10. Handwerkzeugmaschine nach Anspruch 1 oder 2, **dadurch gekennzeichnet, daß** der Kühlabluftkanal (44) trichterartig in Ausströmrichtung vergrößert ist und an seinem größten Querschnitt in den Absaugkanal (40, 42) mündet.

## Claims

1. Portable power tool (10) having a housing (12) which has a motor (20) with air cooling and a cooling exhaust air passage (48) and also an extraction nozzle (42) directing a shavings extraction flow and a dust box (50, 150) thereon having air holes (72, 172), **characterized in that**, from the cooling exhaust air passage (48), cooling exhaust air flows at high velocity around and over the dust box (50, 150) in the region of its air holes (72, 172).

2. Portable power tool according to Claim 1, **characterized in that** the cooling extraction air is directed separately from the dust-laden exhaust air from the housing (12) to the dust box (50, 150) and further, in particular without throttling, over its air holes (72, 172), preferably over a large surface area like a flat passage.

3. Portable power tool according to Claim 1 or 2, **characterized in that** the dust-laden exhaust air flow is directed in the extraction nozzle (42) of the housing (12) in such a way as to be sealed off from the cooling exhaust air flow, in particular by a partition (49).

4. Portable power tool according to Claims 1 to 3, **characterized in that** the dust box (50, 150) carries a hood (66) at a parallel distance from the outer wall (62, 162) having the air holes (72, 172), this hood (66) being impermeable to air and having an air outlet opening (70) at its rear end.

5. Portable power tool according to Claims 1 to 5, **characterized in that** the horizontally longitudinally split extraction nozzle (42) has an inlet opening of the cooling exhaust air passage (48) radially on the outside and at the top, this cooling exhaust air passage (48) being guided in the top part of the extraction nozzle (42).

6. Portable power tool according to Claim 1, **characterized in that** the dust box (50, 150) has a coupling nozzle (52, 152) for connecting to the extraction nozzle (42) of the portable power tool (10), the cooling air passage (54, 154) of which coupling nozzle (52, 152) can be coupled to the cooling exhaust air passage (48) of the extraction nozzle (42).

7. Portable power tool according to Claim 1, **characterized in that** the dust box (50, 150) is provided with a base (60, 160) which can be released in a lid-like manner.

8. Portable power tool according to Claim 1, **characterized in that** the dust box (50) has a top wall (62) which can be released in a lid-like manner and which carries the folded filter (64).

9. Portable power tool according to Claim 1, **characterized in that** the cooling exhaust air passage (48) is united with the extraction passage (40, 42) via a connecting passage (46).

10. Portable power tool according to Claim 1 or 2, **characterized in that** the cooling exhaust air passage (48) is enlarged in a funnel-like manner in the outflow direction and opens at its largest cross section in the extraction passage (40, 42).

## Revendications

1. Machine-outil portative (10) comprenant un boîtier (12) qui présente un moteur (20) refroidi à l'air et un canal d'évacuation d'air de refroidissement (48) ainsi qu'un embout d'aspiration (42) conduisant un flux d'évacuation de copeaux, vers une boîte à poussière (50, 150) munie de trous d'air (72, 172) et portée par l'embout du boîtier,
**caractérisée en ce que**
l'air de refroidissement sortant du canal d'évacuation s'écoule à haute vitesse autour et au-delà de la boîte à poussière (50, 150) dans la zone de ses trous d'air (72, 172).

2. Machine-outil portative selon la revendication 1,
**caractérisée en ce que**
l'air de refroidissement est évacué séparément de l'air empoussiéré hors du boîtier (12) vers la boîte à poussière (50, 150) puis au-dessus des trous d'air (72, 172), en particulier sans étranglement, de préférence sur une grande surface telle qu'un canal plat, vers l'extérieur.

3. Machine-outil portative selon la revendication 1 ou 2,
**caractérisée en ce que**
dans l'embout d'aspiration (42) du boîtier (12), le flux d'air empoussiéré est guidé de façon isolée du flux d'air de refroidissement, en particulier par une cloison (49).

4. Machine-outil portative selon les revendications 1 à 3,
**caractérisée en ce que**
la boîte à poussière (50, 150) comporte, parallèlement et à une certaine distance de la paroi extérieure (62, 162) munie des trous d'air (72, 172), un capot (66) imperméable à l'air, et dont l'extrémité arrière est percée d'une ouverture de passage d'air (70).

5. Machine-outil portative selon les revendications 1 à 5,
**caractérisée en ce que**
l'embout d'aspiration (42) divisé horizontalement dans sa longueur possède radialement à l'extérieur et sur le haut une ouverture d'entrée du canal d'air de refroidissement (48), qui est guidé dans la partie supérieure de l'embout d'aspiration (42).

6. Machine-outil portative selon la revendication 1,
**caractérisée en ce que**
la boîte à poussière (50, 150) présente un système d'accouplement (52, 152) permettant de le relier à l'embout d'aspiration (42) de la machine-outil portative (10), dont le canal d'air de refroidissement (54, 154) peut être accouplé au canal d'air de refroidissement (48) de l'embout d'aspiration (42).

7. Machine-outil portative selon la revendication 1,
**caractérisée en ce que**
la boîte à poussière (50, 150) a un fond (60, 160) amovible comme un couvercle.

8. Machine-outil portative selon la revendication 1,
**caractérisée en ce que**
la boîte à poussière (50) présente une paroi supérieure (62) amovible à la façon d'un couvercle, et elle porte un filtre à plis (64).

9. Machine-outil portative selon la revendication 1,
**caractérisée en ce que**
le canal d'évacuation d'air de refroidissement (44, 46) est assemblé avec le canal d'aspiration (40, 42) par un canal de liaison (46).

10. Machine-outil portative selon la revendication 1 ou 2,
**caractérisée en ce que**
le canal d'évacuation d'air de refroidissement (44) est agrandi à la manière d'un entonnoir dans la direction d'évacuation et débouche au niveau de sa section la plus grande dans le canal d'aspiration (40, 42).
